# EUROPEAN PATENT SPECIFICATION

(11) **EP 1 750 507 B1**
(45) Date of publication and mention of the grant of the patent: **23.12.2015**
(21) Application number: 05744660.1
(22) Date of filing: 02.06.2005
(51) Int. Cl.: A01N 37/40, A01N 37/42, A01N 59/16

(54) **PREPARATION FOR INDUCTION OF INCREASED PRODUCTION OF BIOACTIVE COMPOUNDS IN PLANTS AND ITS USE**
PRÄPARAT FÜR DIE INDUKTION EINER ERHÖHTEN PRODUKTION VON BIOLOGISCH AKTIVEN VERBINDUNGEN IN PFLANZEN UND SEINE VERWENDUNG
PREPARATION POUR L'INDUCTION DE PRODUCTION ACCRUE DE COMPOSES BIOACTIFS DANS DES PLANTES ET SON UTILISATION

(30) Priority: 04.06.2004 CZ 20040687
(43) Date of publication of application: 14.02.2007
(73) Proprietor: Jihoceska Universita V Ceskych Budejovicich, 370 05 Ceské Budejovice (CZ); Cígler, Petr, 370 00 Ceské Budejovice (CZ); Hruby, Martin, 160 00 Praha 6 (CZ); Kuzel, Stanislav, 370 05 Ceské Budejovice (CZ)
(72) Inventor: CÍGLER, Petr, 370 00 Ceské Budejovice (CZ); HRUBY, Martin, 160 00 Praha 6 (CZ); KUZEL, Stanislav, 370 05 Ceské Budejovice (CZ)
(74) Representative: Gabrielova, Marta
(86) International application number: PCT/CZ2005/000045
(87) International publication number: WO 2005/118508

(56) References cited:
- WO-A-01/26464
- DD-A1- 215 928
- DE-A1- 3 151 612
- US-A1- 2003 089 034
- US-B1- 6 306 443
- US-B1- 6 306 443
- S.E.BINNS ET AL.: "Methyl jasmonate increases alkamides and ketoalkene/ynes in Echinacea pallida (Asteraceae)" PHYTOCHEMISTRY., vol. 57, no. 3, 2001, pages 417-420, XP002435489 GBPERGAMON PRESS.
- DATABASE CA [Online] CHEMICAL ABSTRACTS SERVICE, COLUMBUS, OHIO, US; D.R.RUDELL ET AL.: "Methyl jasmonate enhances anthocyan accumulation and modifies production of phenolics and pigments in 'Fuji' apples" XP002435491 retrieved from STN-INTERNATIONAL Database accession no. 137:3154 & JOURNAL OF THE AMERICAN SOCIETY FOR HORTICULTURAL SCIENCE, vol. 127, no. 3, 2002, pages 435-441,
- DATABASE CA [Online] CHEMICAL ABSTRACTS SERVICE, COLUMBUS, OHIO, US; W.WARABIEDA ET AL.: "The influence of methyl jasmonate and b-glucosidase on induction of apple tree resistance mechanisms to two-spotted spider mite" XP002435492 retrieved from STN-INTERNATIONAL Database accession no. 141:152515 & COMMUNICATIONS IN AGRICULTURAL AND APPLIED BIOLOGICAL SCIENCES, vol. 68, no. 4a, 2003, pages 265-270,
- DATABASE WPI Week 199641 Derwent Publications Ltd., London, GB; AN 1996-408407 XP002435494 & JP 08 198863 A (MITSUI PETROCHEM IND CO LTD) 6 August 1996 (1996-08-06)
- G.AVANCINI ET AL.: "Induction of pilocarpine formation in jaborandi leaves by salicylic acid and methyljasmonate" PHYTOCHEMISTRY., vol. 63, 2003, pages 171-175, XP002435490 GBPERGAMON PRESS.
- DATABASE BIOSIS [Online] BIOSCIENCES INFORMATION SERVICE, PHILADELPHIA, PA, US; April 2000 (2000-04), OZAWA RIKA ET AL: "Involvement of jasmonate- and salicylate-related signaling pathways for the production of specific herbivore-induced volatiles in plants" XP002366106 Database accession no. PREV200000241816 & PLANT AND CELL PHYSIOLOGY, vol. 41, no. 4, April 2000 (2000-04), pages 391-398, ISSN: 0032-0781
- DATABASE BIOSIS [Online] BIOSCIENCES INFORMATION SERVICE, PHILADELPHIA, PA, US; 31 May 2004 (2004-05-31), LUO JIE ET AL: "Optimization of elicitors and precursors for paclitaxel production in cell suspension culture of Taxus chinensis in the presence of nutrient feeding" XP002435546 Database accession no. PREV200400307253 & PROCESS BIOCHEMISTRY, vol. 39, no. 9, 31 May 2004 (2004-05-31), pages 1073-1079, ISSN: 1359-5113
- WU L: "A Metabolic approach to Analysis of Bioactive Constituents of Echinacea Genotypes during Plant Development" INTERNET CITATION, [Online] 22 April 2003 (2003-04-22), XP002366103 Retrieved from the Internet: URL:http://www.cdfin.iastate.edu/botanical /presentations/center/1/A%20Met abolic%20Approach%20to%20Analysis%20of%20B ioactive%20Constituents%20o f%20Echinacea%20Genotypes.ppt> [retrieved on 2006-02-02]
- WU L ET AL: "Metabolomics Approach to Analysis of Bioactive Constituents of Echinacea Genotypes" INTERNET CITATION, [Online] 22 April 2003 (2003-04-22), XP002366104 Retrieved from the Internet: URL:http://www.cdfin.iastate.edu/botanical /presentations/conference/2003/ Wu%20Poster.ppt> [retrieved on 2006-02-02]
- DATABASE BIOSIS [Online] BIOSCIENCES INFORMATION SERVICE, PHILADELPHIA, PA, US; September 2001 (2001-09), SALMORE ALISSA K ET AL: "Environmental and genotypic influences on isoquinoline alkaloid content in Sanguinaria canadensis" XP002435547 Database accession no. PREV200100439937 & JOURNAL OF CHEMICAL ECOLOGY, vol. 27, no. 9, September 2001 (2001-09), pages 1729-1747, ISSN: 0098-0331
- WU L.: "A Metabolic approach to Analysis of Bioactive Constituents of Echinacea Genotypes during Plant Development" POWER POINT PRESENTATION, [Online] 22 April 2003 (2003-04-22), XP002366103 Retrieved from the Internet: URL:http://www.cdfin.iastate.edu/botanical /presentations/center/1/A%20Metabolic%20Ap proach%20to%20Analysis%20of%20Bioactive%20 Constituents%20of%20Echinacea%20Genotypes. ppt.> [retrieved on 2006-02-02]
- WU, L. ET AL.: "Metabolomics Approach to Analysis of Bioactive Constituents of Echinacea Genotypes" 1581, [Online] 22 April 2003 (2003-04-22), XP002366104 Retrieved from the Internet: URL:http://64.233.179.104/search?q=cache:e 6b1LtDUAYUJ:www.cdfin.iastate.edu/botanica l/presentations/conference/2003/Wu%2520Pos ter.ppt+a+metabolic+approach+to+analysis+o f+bioactive+constituents+of+echinacea&hl=d e&gl=nl&ct=clnk&cd=3> [retrieved on 2006-02-02]
- DATABASE WPI Section Ch, Week 200216 Derwent Publications Ltd., London, GB; Class C03, AN 1999-095389 XP002366115 & WO 99/00016 A (COLEGIO POSTGRADUADOS) 7 January 1999 (1999-01-07) & WO 99/00016 A 7 January 1999 (1999-01-07)
- DATABASE BIOSIS [Online] BIOSCIENCES INFORMATION SERVICE, PHILADELPHIA, PA, US; March 2002 (2002-03), HRUBY MARTIN ET AL: "Contribution to understanding the mechanism of titanium action in plant" XP002366105 Database accession no. PREV200200268228 & JOURNAL OF PLANT NUTRITION, vol. 25, no. 3, March 2002 (2002-03), pages 577-598, ISSN: 0190-4167
- DATABASE BIOSIS [Online] BIOSCIENCES INFORMATION SERVICE, PHILADELPHIA, PA, US; April 2000 (2000-04), OZAWA RIKA ET AL: "Involvement of jasmonate- and salicylate-related signaling pathways for the production of specific herbivore-induced volatiles in plants" XP002366106 Database accession no. PREV200000241816 & PLANT AND CELL PHYSIOLOGY, vol. 41, no. 4, April 2000 (2000-04), pages 391-398, ISSN: 0032-0781
- OZAWA RIKA ET AL: "Involvement of jasmonate- and salicylate-related signaling pathways for the production of specific herbivore-induced volatiles in plants", PLANT AND CELL PHYSIOLOGY, OXFORD UNIVERSITY PRESS, UK, vol. 41, no. 4, 1 April 2000 (2000-04-01), pages 391-398, XP002540238, ISSN: 0032-0781

## Description

### Technical Field

The invention relates to new preparations which induce the increase of the content of bioactive compounds in whole intact plants grown on soil, synthetic substrate or in hydropony, and methods of their application in the form of foliar sprays. Ecologically harmless non-toxic elicitors, namely plant stress hormones, their derivatives and titanium compounds are used as the active ingredients of said preparation.

### Background Art

Drugs of plant origin have been used for both palliative and curative treatments of various diseases for a long time (Benzi G., Ceci A. (1997) Pharm. Res. 35(5), 355-362). Although many pharmacologically active compounds originally contained in plants are now manufactured synthetically (e.g. caffeine), isolation from plant material is still the economically most favourable way of production of numerous substances, especially those with complex chemical structure (e.g. digitoxin, ergotamine, strychnine etc.). Distinct part of the production of medicinal plants thus now serves for the isolation of active substances (e.g. seeds of *Sylibium marianum* for the isolation of a complex of flavonoids). Numerous substances isolated from plant material are used for the semi-synthetic production of medicaments, e.g. alkaloid ergotamine, from which dihydroergotamine is produced (Český lékopis 1997, GRADA, Praha 1997).

Pharmacologically interesting bioactive compounds of plant origin, with only few exceptions such as polysaccharides, are products of secondary metabolism that are believed to play a key role in plant defense against stress situations such as bacterial or fungal infections or consuming by herbivores. The products of secondary metabolism, which is usually highly species-specific, are often complex mixtures of structurally related derivatives (Sudha G., Ravishankar G.A. (2002) Plant Cell, Tissue Organ Cult. 71(3), 181-212).

Recently, considerable effort was devoted to the production of plant secondary metabolites in plant cells grown in *in vitro* cell cultures (Kim Y., Wyslouzil B.E., Weathers P.J. (2002) In Vitro Cell. Develop. Biol.-Plant 38(1), 1-10; Wysokinska H., Chmiel A. (1997) Acta Biotechnol. 17(2), 131-159). The reason for which the *in vitro* arrangement is used are several advantages, provided by these techniques - especially it is possible to use the cells from plants which are rare, protected, or difficult to cultivate or their cultivation takes a long time. The total time spent from starting *in vitro* cell cultures to harvesting is much shorter than the time necessary for the conventional agrotechnical production. On the other hand, the main obstacles of the use of the cell cultures in biotechnology are high initial investment (special large-scale bioreactors are required) and operational costs (special additives to cell cultures, demands on sterility of the environment). The growth of plant cells is also generally slower and more difficult to reproduce than the growth of e.g. bacteria or fungi, and the products often have to be isolated discontinually after lysis of the cells. Thus, despite extensive research in this field, the use of plant cell cultures for the production of plant secondary metabolites in industrial scale is limited to few special cases (Dicosmo F., Misawa M. (1995) Biotechnol. Advances 13(3), 425-453).

To boost the production of secondary metabolites, a process called elicitation is often used in plant *in vitro* cultures. The elicitation is performed by addition of a stressing agent, elicitor, to the growth medium; this leads to manifold increase of the biosynthesis of secondary metabolites, that would normally serve for defense of the plant itself (Bulgakov V.P. et al. (2002) J. Biotechnol. 97(3), 213-221). Among known elicitors are various organic substances, heavy metal salts and fluorides. However, although this approach is often used for the plant cell cultures, it has not been applied to whole intact plants grown in soil, on synthetic substrates or in hydropony to date, even though nowadays a distinct part of the field production of medicinal plants is used for the isolation of active substances or their precursors, from which medicaments are manufactured via synthetic modifications. There is no doubt that such eliciting preparations are largely exploitable in the agricultural and pharmaceutical practice, because for many substances the isolation from plant material is economically the most favourable way of production.

XP002540238 discloses the use of compositions comprising methyl salicylate and jasmonic acid for increasing elicitation of terpenoids in plants. XP002366103 discloses the use of salicylic acid for inducing an increased production of bioactive compounds in plants.

XP0023661 discloses the use of salicylates to increase bioproductivity of plants.

DE3151612 discloses plant nutrient compositions comprising titanium salts and salicylic acid.

Our aim was to develop novel type of preparations inducing the increased production of bioactive substances after application to whole intact plants by foliar spraying. The composition and the method of application of the preparations are the object of the proposed invention. The keynote idea is the use of ecologically harmless non-toxic elicitors (plant stress hormones, their derivatives and titanium compounds) for the induction of moderate stress in the plants, to which the plants after the spraying application respond by the induction of biosynthesis of defensive secondary metabolites, among which most of the pharmacologically important compounds belong.

A novel method of the induction of the increased production of bioactive plant secondary metabolites in whole intact plants grown in soil, in synthetic substrate or in hydropony using foliar spraying with the preparation inducing moderate stress in the plants, the preparation containing ecologically harmless non-toxic elicitors, namely plant stress hormones, their derivatives and titanium compounds, is proposed hereinafter.

### Disclosure of Invention

Object of this invention is use of a preparation for application by foliar spraying on whole intact plants grown in soil, in synthetic substrate or in hydropony, inducing the increased production of bioactive compounds in the plants, said preparation containing as active ingredient
(a) at least one compound of general formula (I) 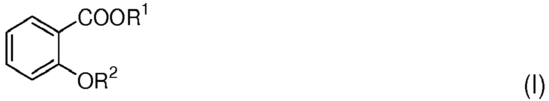 wherein R¹ is hydrogen, alkali metal cation, ammonium, alkyl chain having 1 - 18 carbon atoms, alkyl chain having 1 - 18 carbon atoms ω-substituted with hydroxy, amino or sulfonic acid group, cycloalkyl having 3 - 8 carbon atoms, isoalkyl having 1 - 18 carbon atoms, phenyl, phenyl substituted in positions 2, 3, 4, 5 and 6 with hydrogen, alkoxy group having 1 - 5 carbon atoms, alkyl having 1 - 5 carbon atoms in chain, halogen or hydroxy group;
   R² is hydrogen, acyl having 1 - 18 carbon atoms, alkyl chain having 1 - 18 carbon atoms, alkyl chain having 1 - 18 carbon atoms ω-substituted with hydroxy, amino or sulfonic acid group, cycloalkyl having 3 - 8 carbon atoms, isoalkyl having 1 - 18 carbon atoms;
   in concentration range 10⁻⁷ to 10⁻² mol.dm⁻³,
   in combination with
(b) at least one compound of:
   titanium compounds
   formed by the reaction of titanium(IV) chloride with ascorbic acid, citric acid, malic acid, tartaric acid, succinic acid, oxalic acid, salicylic acid, ethylenediaminetetraacetic acid or amino acids;
   titanium(IV) chloride, titanium(III) chloride, titanyl sulfate, TiO(NH₄)₂(SO₄)₂, hexafluorotitanates of general formula (II)

      M₂TiF₆ (II)

      wherein M is alkali metal cation, ammonium cation or tetraalkylammonium cation having 1 - 4 carbon atoms in each alkyl chain;
   titanium (IV) alkoxides of general formula (III)

      Ti(OR³)₄ (III)

      wherein R³ is alkyl chain having 1 - 18 carbon atoms, alkyl chain having 1 - 18 carbon atoms ω-substituted with hydroxy, amino or sulfonic acid group, cycloalkyl having 3 - 8 carbon atoms, isoalkyl having 1 - 18 carbon atoms,
   in concentration range 10⁻⁶ - 10⁻³ mol.dm⁻³,
   and optionally with
(c) jasmonic acid derivatives of general formula (IV) 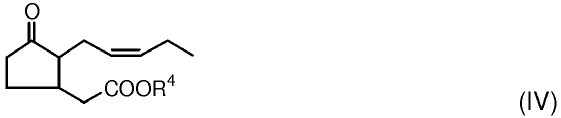 wherein R⁴ is hydrogen, alkyl chain having 1 - 4 carbon atoms, alkali metal cation, ammonium cation, alkylammonium cation, dialkylammonium cation, trialkylammonium cation or tetraalkylammonium cation respectively, wherein the alkyl chain has 1 - 5 carbon atoms,
   in concentration range 10⁻⁹ - 10⁻⁴ mol.dm⁻³;
   and suitable additives, preservatives and solvents.

In the preferred embodiment, the preparation further contains a nitrogen fertilizer selected from the group consisting of urea, ammonium sulfate, ammonium nitrate, ammonium hydrogenphosphate, ammonium dihydrogenphosphate, potassium nitrate, calcium nitrate and sodium nitrate, or their mixture.

The preparation is suitable for use with a method of induction of increasing the content of bioactive substances in plants grown in soil, in hydropony or in synthetic substrate, wherein the preparation of the invention is applied to leaves of the whole intact plants in the form of solution, emulsion or suspension by foliar spraying.

The choice of the substituents R¹ and R² of the salicylic acid derivatives and the substituent R⁴ of the jasmonic acid derivatives enables precise tuning of the molecule hydrophility / lipophility, so that the foliar spraying application of the preparation of the invention to whole intact plants can be exploited in agriculture.

The active component of the compounds containing titanium is the titanium in the oxidation state IV (with the exception of titanium (III) chloride in which it is the titanium in the oxidation state III), which may be present as a complex or as a salt. The stimulation effects of titanium compounds on plant metabolism are already known (Hrubý M., Cígler P., 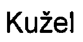 S. (2002) *J. Plant Nutr.* 25(3), 577-598; 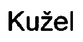 S., Hrubý M., Cígler P., 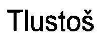 P., Phu N.V. (2003) *Biol. Trace Elem. Res.* 91(2), 179-190), but in accordance with this invention the titanium compounds are used for different purpose, i.e. as general stressing agent, inducing the increase of the content of bioactive substances. The list of active ingredients containing titanium includes a range of ligands that form complexes or salts with titanium, suitable for exploitation in agriculture for the foliar application to the whole intact plants.

The preparation may optionally contain suitable additives, preservatives and solvents.

The preparation of the invention for the application to whole intact plants by foliar spraying is manufactured by dissolution of the active ingredients i n suitable solvent, subsequent dilution and optional addition of additives. Water, ethanol, methanol or non-toxic water-miscible solvents can be used as suitable solvents. Water is used to dilute the concentrated stock solution of the active ingredient. Additives may be added in any stage of the manufacture of the preparation. Their objective is to improve the physical and physicochemical properties of the foliar spray, to improve the penetration of active ingredients through cuticle and to increase the biological effect of the active ingredients. Additives are commonly used in most foliar sprays for use in agriculture and their composition is taught e.g. in the U.S. patents (Dufau G., Lauilhe J.-P. US 6,291,401; Coleman R. US 6,218,336). In particular, non-ionogenic surface-active substances that improve the solubility of lipophilic compounds, decrease surface tension of the solution, improve its dispersion in the spray and improve wettability of the plant leaves, are used as additives. Plant or mineral oils, which are compatible with the cuticle and thus improve the penetration of lipophilic substances, may also be used as additives. Nitrogen-based fertilizers may also be used as additives because they show synergic effects with some elicitors.

Preparation and properties of the novel preparations of the invention, method of their application and their effects on induction of increasing the production of bioactive substances are further illustrated by the following examples, which should not be construed as further limiting.

### Figures

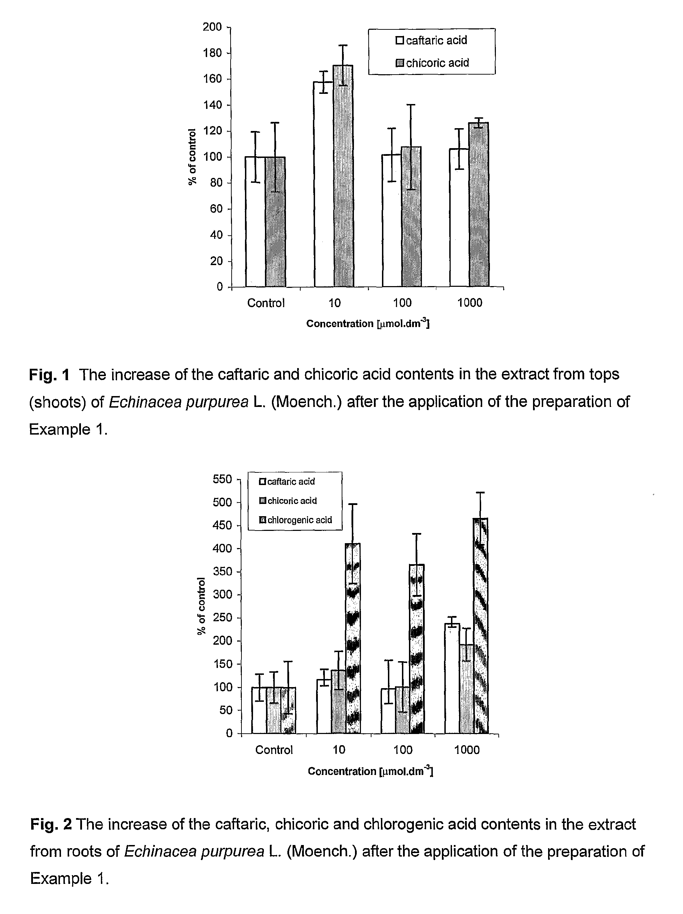

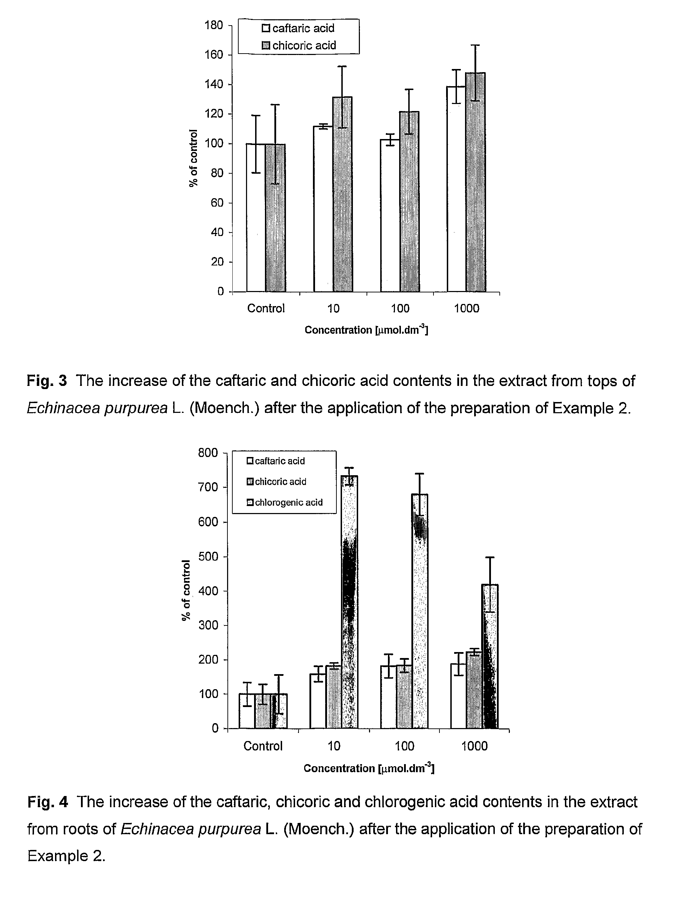

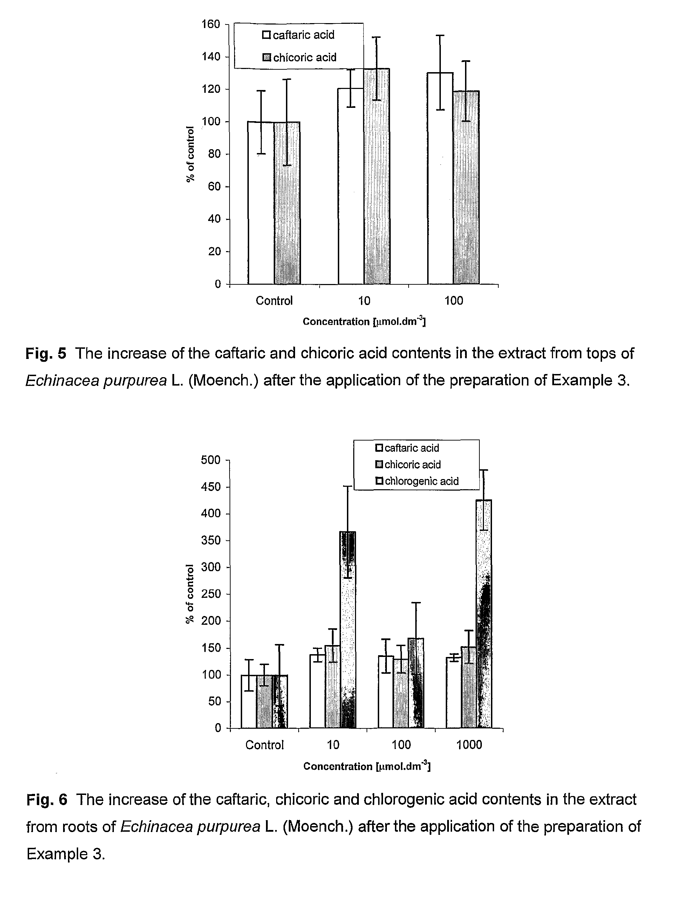

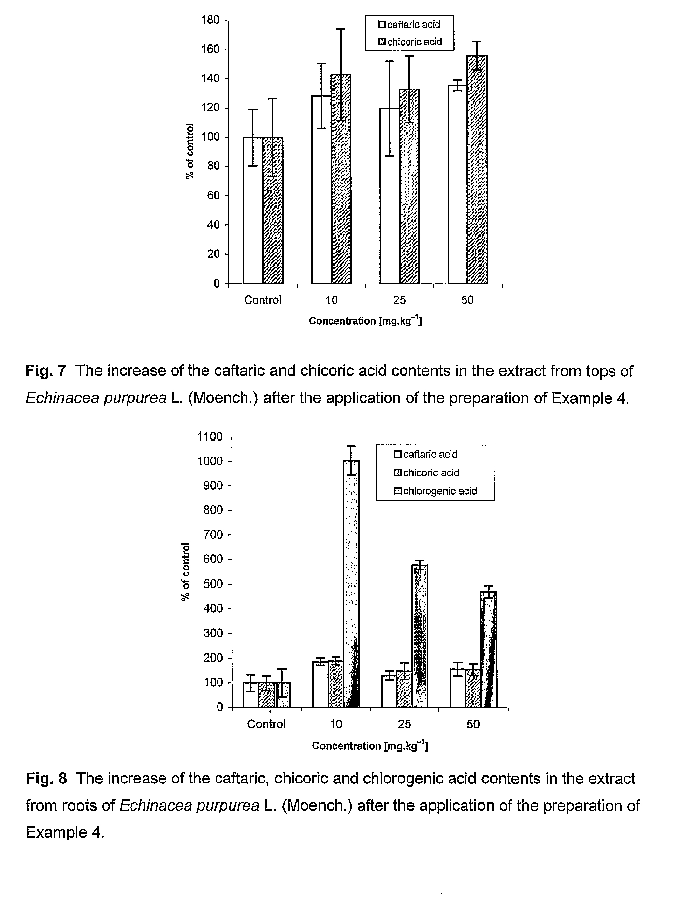

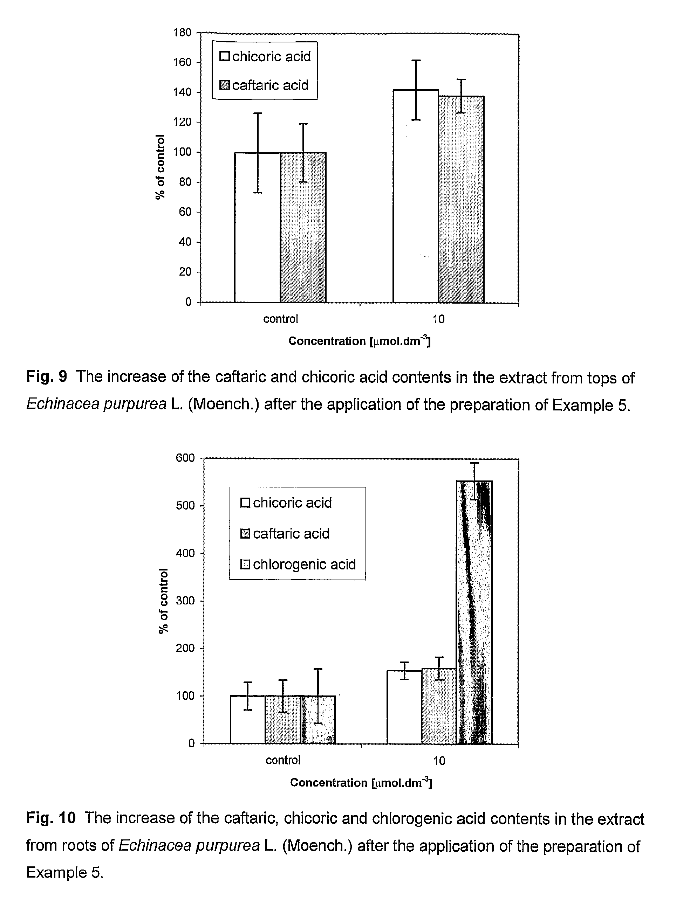

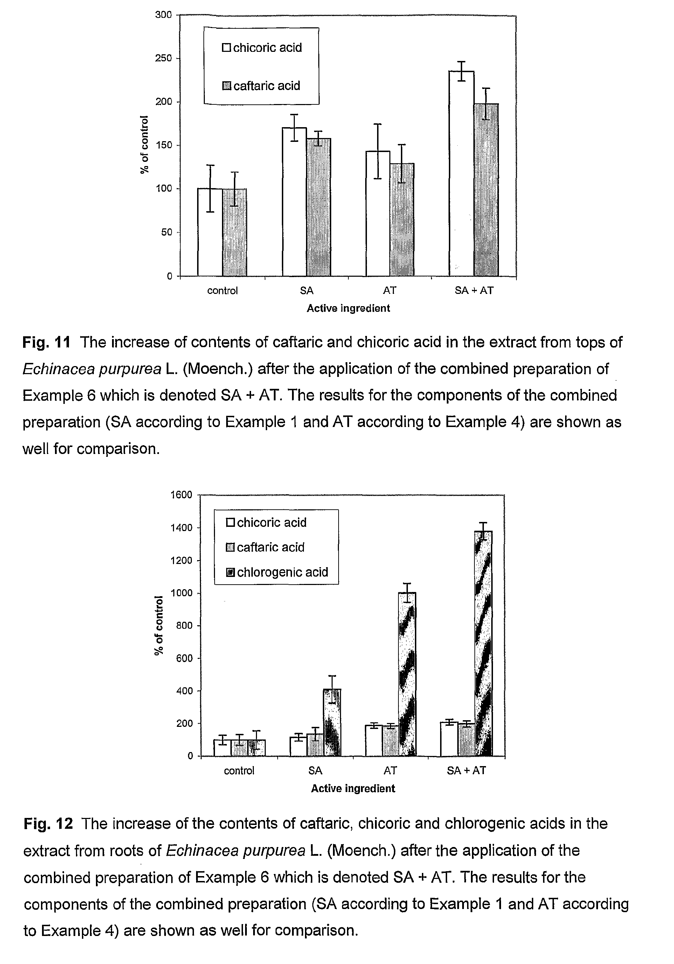

The chart on Fig. 1 shows the increase of the caftaric and chicoric acid contents in the extract from tops (shoots) of *Echinacea purpurea* L. (Moench.) after the application of the preparation of Example 1.
The chart on Fig. 2 shows the increase of the caftaric, chicoric and chlorogenic acid contents in the extract from roots of *Echinacea purpurea* L. (Moench.) after the application of the preparation of Example 1.
The chart on Fig. 3 shows the increase of the caftaric and chicoric acid contents in the extract from tops of *Echinacea purpurea* L. (Moench.) after the application of the preparation of Example 2.
The chart on Fig. 4 shows the increase of the caftaric, chicoric and chlorogenic acid contents in the extract from roots of *Echinacea purpurea* L. (Moench.) after the application of the preparation of Example 2.
The chart on Fig. 5 shows the increase of the caftaric and chicoric acid contents in the extract from tops of *Echinacea purpurea* L. (Moench.) after the application of the preparation of Example 3.
The chart on Fig. 6 shows the increase of the caftaric, chicoric and chlorogenic acid contents in the extract from roots of *Echinacea purpurea* L. (Moench.) after the application of the preparation of Example 3.
The chart on Fig. 7 shows the increase of the caftaric and chicoric acid contents in the extract from tops of *Echinacea purpurea* L. (Moench.) after the application of the preparation of Example 4.
The chart on Fig. 8 shows the increase of the caftaric, chicoric and chlorogenic acid contents in the extract from roots of *Echinacea purpurea* L. (Moench.) after the application of the preparation of Example 4.
The chart on Fig. 9 shows the increase of the caftaric and chicoric acid contents in the extract from tops of *Echinacea purpurea* L. (Moench.) after the application of the preparation of Example 5.
The chart on Fig. 10 shows the increase of the caftaric, chicoric and chlorogenic acid contents in the extract from roots of *Echinacea purpurea* L. (Moench.) after the application of the preparation of Example 5.
The chart on Fig. 11 shows the induction of contents of caftaric and chicoric acid in the extract from tops of *Echinacea purpurea* L. (Moench.) after the application of the combined preparation of Example 6 which is denoted SA + AT. The results for the components of the combined preparation (SA according to Example 1 and AT according to Example 4) are shown as well for comparison.
The chart on Fig. 12 shows the increase of the contents of caftaric, chicoric and chlorogenic acids in the extract from roots of *Echinacea purpurea* L. (Moench.) after the application of the combined preparation of Example 6 which is denoted SA + AT. The results for the components of the combined preparation (SA according to Example 1 and AT according to Example 4) are shown as well for comparison.

### Examples of carrying out the Invention

### Example 1

The preparation was obtained by the addition of the salicylic acid solution in ethanol (concentration 0,1 mol.dm⁻³) to water to achieve the final concentration of salicylic acid in solution 10, 100 and 1000 µmol.dm⁻³, respectively.

### Example 2 (comparative example, not forming part of the invention)

The preparation was obtained by the addition of the salicylic acid methyl ester solution in ethanol (concentration 0,1 mol.dm⁻³) to water to achieve the final concentration of salicylic acid methyl ester in solution 10, 100 and 1000 µmol.dm⁻³, respectively.

### Example 3

The preparation was obtained by the addition of the acetylsalicylic acid solution in ethanol (concentration 0,1 mol.dm⁻³) to water to achieve the final concentration of acetylsalicylic acid in solution 10, 100 and 1000 µmol.dm⁻³ respectively.

### Example 4

Titanium(IV) chloride was slowly added to the 10 % aqueous ascorbic acid under continuous cooling and vigorous stirring. The resulting solution was diluted with water to the titanium concentration of 1000 mg.kg⁻¹. The preparation to be applied by spraying was prepared by dilution of this stock solution with water to titanium concentrations of 10, 25 and 50 mg.kg⁻¹ respectively.

### Example 5

The preparation was obtained by the addition of the methyl jasmonate solution in ethanol (concentration 0,1 mol.dm⁻³) to water to achieve the final concentration of methyl jasmonate in solution 10 µmol.dm⁻³.

### Example 6

The preparation was obtained by combining the preparations of Examples 1 and 4 containing 20 µmol.dm⁻³ salicylic acid and 20 mg.kg⁻¹ titanium, respectively, in 1:1 volume ratio. The resulting concentrations in the combined preparation was 10 µmol.dm⁻³ salicylic acid and 10 mg.kg⁻¹ titanium.

### Application of the preparations

The novel preparations of the invention can be used to increase the contents of bioactive components in plants. The performed experiments clearly document their intensive stimulation effect on the formation of plant bioactive substances. *Echinacea purpurea* L. (Moench.) was chosen as a model plant. Extracts from this plant possess strong immunostimulating and antibacterial activity, the phenolic components were proved to have the abitility of free radical quenching, HIV integrase inhibition and anti-HIV replication activity (D.M. et al. (1997) Immunopharmacology 35(3), 229-235). Phenolic substances, mainly chicoric, caftaric and chlorogenic acids, are considered to be the main active components

Pilot plant experiments A - F were performed with the preparations of the Examples 1 - 6. The increase of the contents of bioactive components in *Echinacea purpurea* L. (Moench.) after the application of the preparations was monitored. The experiments were carried out on the field in cadastral territory Dolní Pěna, village Dolní Pena, district Jindřichův Hradec, the owner of the field is Ing. Nouza. The field is situated 473 meters above the sea level. The experiments were started in the year 2001 with the plant *Echinacea purpurea* L. (Moench.) on ca. 2200 m², row wideness 70 cm, distance between the plants in the row being 20 cm. The plantation was two years old.

Soil characteristics on the field:

| | | |
|---|---|---|
| PH_{KCl} 5,6 | Cₒₓ = 2,7 % | N (%) = 0,14 |
| P mg/kg = 219 | C_{HL} = 13,65 mg/g | N-NH₄ = 1,1 mg/kg |
| K mg/kg = 210 | C_{HK} = 5,06 mg/g | N-NO₃ = 3,1 mg/kg |
| Mg mg/kg = 75 | C_{FK} = 8,59 mg/g | N_{mineralizable} = 7,2 mg/kg |
| Ca mg/kg = 1019 | C_{HK:FK}= 0,59 | N_{inorganic}= 3,7 mg/kg |

Concentrations of the active ingredients 10, 100 a 1000 µmol.dm⁻³ in the preparations of Examples 1 to 3 were used, concentrations of the active ingredient 10, 25 a 50 mg.kg⁻¹ Ti in the preparation of Example 4, concentration of the active ingredients corresponding to 10 µmol.dm⁻³ methyl jasmonate in the preparation of Example 5 and concentration of the active ingredients corresponding to 10 µmol.dm⁻³ salicylic acid and 10 mg.kg⁻¹ Ti in the preparation of Example 6.

The application of the preparations of Examples 1 - 6 was done on 10 m² plots of land using a knapsack sprayer. The first foliar application of the elicitors was performed on June 3^{rd}, 2001 (the plantation was just before flowering), the second application on June 25^{th}, 2001, the third application on July 15^{th}, 2001, and the fourth application on August 15^{th}, 2001. The total sprayed volume was 10 l per 10 m². All the variants including a non-treated control were run in 4 replications.

The plantation was harvested on September 17^{th} 2001, tops and roots were collected separately. The yield of fresh tops and thoroughly washed roots (the soil remains were washed off) from the land area 10 m² was estimated. Dry weights of tops and roots material were estimated as well. Samples were taken from all variants and replications for the analysis of active substances *via* HPLC (4 replications = 4 combined samples of tops material and 4 combined samples of roots material of each variant). The combined samples of plants (ca 500 g) were dried at 40 °C in an oven and finely ground in a VIPO knife mortar.

For the analysis of the content of active substances, 5 g of finely ground material was extracted in the dark for 1 week at room temperature into 50 ml of 96% ethanol (Tamnda, plc.), subsequently 50 ml of distilled water was added and the mixture was extracted again for 1 week. The extracts were filtered through a Filpap 1.7 µm glass fiber filter using a Milipore filtration device, frozen and kept at -20 °C.

The content of active substances was analyzed in these extracts using high-performance liquid chromatography (HPLC, Hewlett-Packard 1050 Instrument). As the mobile phase the mixture of acetonitrile (Merck), distilled water and trifluoroacetic acid /TFA/ (Fluka) was used. Mobile phase A: 5% acetonitrile + 0,15% TFA; mobile phase B: 80% acetonitrile + 0,15% TFA. Gradient: 0% B- 50% B, 50 min. Flow of the mobile phase was 0,250 ml/min, UV-VIS detection on a DAD detector (Hewlett-Packard 1040 A), scanning range 190-600 nm. The chromatogram was evaluated for λ = 330 nm. Data were analyzed using a HP Chem Station software (Hewlett-Packard). The standards [caftaric acid (Dalton Chemical Inc. Kanada), caffeic acid (Aldrich) and chlorogenic acid (Aldrich)] for injection were dissolved in 50% methanol (Merck). The content of chicoric acid was calculated on caftaric acid. Column with the stationary phase Phenomenex Luna C 18, 2 x 150 mm, 3 µm particles with a Phenomenex precolumn and 5 µl sampling loop were used.

### Experiment A: The increase of the content of bioactive components in Echinacea purpurea L. (Moench.) after the application of the preparation of Example 1. (comparative example, not forming part of the invention)

The results are summarized in the charts in Fig. 1 and 2. The preparation of Example 1 strongly increases the content of caftaric and chicoric acids in the extract from tops, most effectively at salicylic acid concentration 10 µmol.dm⁻³. The concentration of salicylic acid 1000 µmol.dm⁻³ is the most effective for the elicitation of caftaric, chicoric a chlorogenic acid content in the roots, wherein the extreme increase of the content of these substances, especially of chlorogenic acid, is achieved in the extract from roots.

### Experiment B: The increase of the content of bioactive components in Echinacea purpurea L. (Moench.) after the application of the preparation of Example 2. (comparative example, not forming part of the invention)

The results are summarized in the charts in Fig. 3 and 4. The preparation of Example 2 strongly increases the contents of caftaric and chicoric acids in the tops, most effectively at salicylic acid methyl ester concentration 1000 µmol.dm⁻³. The concentration of salicylic acid methyl ester 1000 µmol.dm⁻³ is the most effective for the elicitation of caftaric and chicoric acids contents in the roots. The extreme increase of chlorogenic acid content is achieved at the concentration of salicylic acid methyl ester 10 µmol.dm⁻³.

### Experiment C: The increase of the content of bioactive components in Echinacea purpurea L. (Moench.) after the application of the preparation of Example 3 (comparative example, not forming part of the invention)

The results are summarized in the charts in Fig. 5 and 6. The formulation of Example 3 strongly increases the caftaric and chicoric acid contents in the tops similarly for the acetylsalicylic acid concentrations 10 and 100 µmol.dm⁻³, for the elicitation of the contents of caftaric, chicoric and chlorogenic acids in the roots the most effective is the concentration of acetylsalicylic acid 1000 µmol.dm⁻³, wherein strong increase of the content of all the monitored substances, and especially of chlorogenic acid is achieved.

### Experiment D: The increase of the contents of bioactive components in Echinacea purpurea L. (Moench.) after the application of the preparation of Example 4. (comparative example, not forming part of the invention)

The results are summarized in the charts in Fig. 7 and 8. The preparation of Example 4 strongly increases the caftaric and chicoric acid contents in the tops, most effectively at the concentration 50 mg.kg⁻¹ of Ti. The most effective concentration of Ti for the elicitation of caftaric, chicoric and chlorogenic acids contents in the roots is 10 mg.kg⁻¹, which strongly increases the contents of all the monitored active substances, especially of chlorogenic acid, in the extract from roots.

### Experiment E: The increase of the content of bioactive components in Echinacea purpurea L. (Moench.) after the application of the preparation of Example 5. (comparative example, not forming part of the invention)

The results are summarized in the charts in Fig. 9 and 10. The preparation of Example 5 strongly increases the caftaric and chicoric acid contents in the tops at methyl jasmonate concentration 10 µmol.dm⁻³. It also increases the contents of all the monitored active substances, especially the chlorogenic acid content, in the extract from roots.

### Experiment F: The increase of the content of bioactive components in Echinacea purpurea L. (Moench.) after the application of the preparation of Example 6.

The results are summarized in the charts in Fig. 11 and 12. The preparation of Example 6 at the concentration 10 µmol.dm⁻³ salicylic acid and 10 mg.kg⁻¹ Ti strongly increases the caftaric and chicoric acid contents in the tops. The increase of the contents of all the monitored active substances, especially the chlorogenic acid content, was proved in the extract from roots. In comparison with the separate active components that were applied in the same concentrations it is evident that salicylic acid and Ti possess synergic effect.

It is apparent from the above described experiments, that any of the new preparations of the invention can be used for the increase of the content of active components in plants. All the new preparations possess intensive stimulating activity on the production of bioactive substances in the model medicinal plant, *Echinacea purpurea* L. (Moench.). These activities are unique, because the preparations differ mutually in the metabolic pathways they influence (each preparation influences the increase of the contents of active substances in a different way) and in organ specifity (each preparation possesses different activity in the stimulation of tops and roots). This effect can be exploited in a targeted stimulation of selected pharmacologically interesting compounds. It was also proved that the combined preparation, containing the mixture of the elicitors, may possess the synergic effect and increase the overall effectivity of the elicitation of bioactive components.

### Industrial use

The new ecologically harmless non-toxic preparations according to the proposed invention can be used for the induction of increase of the content of bioactive components in plants. They are particularly suitable for the targeted stimulation of selected pharmacologically interesting medicinal plants.

## Claims

1. Use of a preparation containing as active ingredient
(a) at least one compound of general formula (I) 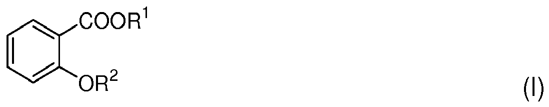 wherein R¹ is hydrogen, ammonium, alkali metal cation, alkyl chain having 1 - 18 carbon atoms, alkyl chain having 1 - 18 carbon atoms ω-substituted with hydroxy, amino or sulfonic acid group, cycloalkyl having 3 - 8 carbon atoms, isoalkyl having 1 - 18 carbon atoms, phenyl, phenyl substituted in positions 2, 3, 4, 5 and 6 with hydrogen, alkoxy group having 1 - 5 carbon atoms, alkyl having 1 - 5 carbon atoms in chain, halogen or hydroxy group;
R² is hydrogen, acyl having 1 - 18 carbon atoms, alkyl chain having 1 - 18 carbon atoms, alkyl chain having 1 - 18 carbon atoms ω-substituted with hydroxy, amino or sulfonic acid group, cycloalkyl having 3 - 8 carbon atoms, isoalkyl having 1 - 18 carbon atoms;
in concentration range 10⁻⁷ to 10⁻² mol.dm⁻³,
in combination with
(b) at least one of:
titanium compounds formed by reaction of titanium(IV) chloride with ascorbic acid, citric acid, malic acid, tartaric acid, succinic acid, oxalic acid, salicylic acid, ethylenediaminetetraacetic acid or amino acids;
titanium(IV) chloride, titanium(III) chloride, titanyl sulfate, TiO(NH₄)₂(SO₄)₂, hexafluorotitanates of general formula (II)
M₂TiF₆ (II)
wherein M is alkali metal cation, ammonium cation or tetraalkylammonium cation having 1 - 4 carbon atoms in each alkyl chain;
titanium (IV) alkoxides of general formula (III)
Ti(OR³)₄ (III)
wherein R³ is alkyl chain having 1 - 18 carbon atoms, alkyl chain having 1 - 18 carbon atoms ω-substituted with hydroxy, amino or sulfonic acid group, cycloalkyl having 3 - 8 carbon atoms, isoalkyl having 1 - 18 carbon atoms,
in concentration range 10⁻⁶ - 10⁻³ mol.dm⁻³,
and further contains suitable additives, preservatives and solvents
for the induction of increased production of bioactive compounds in plants grown in soil, in synthetic substrate or in hydropony.

2. Use according to claim 1, wherein said preparation also contains at least one compound selected from
(c) jasmonic acid derivatives of general formula (IV) 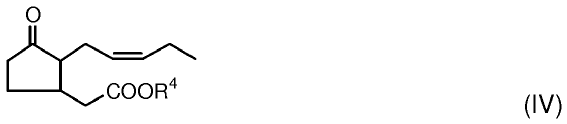 wherein R⁴ is hydrogen, alkyl chain having 1 - 4 carbon atoms, alkali metal cation, ammonium cation, alkylammonium cation, dialkylammonium cation, trialkylammonium cation or tetraalkylammonium cation respectively, wherein the alkyl chain has 1 - 5 carbon atoms,
in concentration range 10⁻⁹ - 10⁻⁴ mol.dm-³;
for the induction of increased production of bioactive compounds in plants grown in soil, in synthetic substrate or in hydropony.

3. Use according to claim 1 or 2, **characterized in that** the preparation further contains one or more compounds selected from the group consisting of: urea, ammonium sulfate, ammonium nitrate, ammonium hydrogenphosphate, ammonium dihydrogenphosphate, potassium nitrate, calcium nitrate and sodium nitrate.

## Patentansprüche

1. Verwendung eines Präparates enthaltend als Wirkungsstoff
(a) mindestens eine Verbindung der allgemeinen Formel (I) 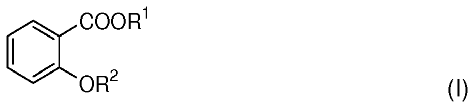 wobei R¹ bedeutet Wasserstoff, Ammonium, Alkalimetallkation, Alkylkette enthaltend 1 - 18 Kohlenstoffatome, Alkylkette enthaltend 1 - 18 Kohlenstoffatome ω-substituiert mit Hydroxy, Amino- oder Sulfongruppe, Cykloalkyl enthaltend 3 - 8 Kohlenstoffatome, Isoalkyl enthaltend 1 - 18 Kohlenstoffatome, Phenyl, Phenyl substituiert in Positionen 2, 3, 4, 5 und 6 mit Wasserstoff, Alkoxygruppe enthaltend 1 - 5 Kohlenstoffatome, Alkyl enthaltend 1 - 5 Kohlenstoffatome, Halogen oder Hydroxygruppe;
R² bedeutet Wasserstoff, Acyl enthaltend 1 - 18 Kohlenstoffatome, Alkylkette enthaltend 1 - 18 Kohlenstoffatome, Alkylkette enthaltend 1 - 18 Kohlenstoffatome ω-substituiert mit Hydroxy, Amino- oder Sulfongruppe, Cykloalkyl enthaltend 3 - 8 Kohlenstoffatome, Isoalkyl enthaltend 1 - 18 Kohlenstoffatome;
im Konzentrationsbereich 10⁻⁷ bis 10⁻² mol.dm⁻³,
in Kombination mit
(b) mindestens einer Verbindung von den folgenden:
Titan-Verbindungen erhältlich durch die Reaktion von Titan(IV)-chlorid mit der Askorbinsäure, Zitronensäure, Apfelsäure, Weinsäure, Bernsteinsäure, Oxalsäure, Salizylsäure, Ethylendiamintetraessigsäure oder mit den Aminosäuren;
Titan(IV)-chlorid, Titan(III)-chlorid, Titanylsulfat, TiO(NH₄)₂(SO₄)₂, Hexafluorotitanate der allgemeinen Formel (II)
M₂TiF₆ (II)
wobei M bedeutet Alkalimetallkation, Ammonium- oder Tetraalkylammoniumkation enthaltend 1 - 4 Kohlenstoffatome in jeder Alkylkette;
Titan(IV)-alkoxide der allgemeinen Formel (III)
Ti(OR³)₄ (III)
wobei R³ bedeutet Alkyl enthaltend 1 - 18 Kohlenstoffatome, Alkyl enthaltend 1 - 18 Kohlenstoffatome ω-substituiert mit Hydroxy, Amino- oder Sulfongruppe, Cykloalkyl enthaltend 3 - 8 Kohlenstofftome, Isoalkyl enthaltend 1 - 18 Kohlenstoffatome,
im Konzentrationsbereich 10⁻⁶ bis 10⁻³ mol.dm⁻³,
sowie weiter enthaltend geeignete Begleitstoffe, Konservierungs- und Lösungsmittel,
zur Induktion der Bildungssteigerung von bioaktiven Verbindungen in den im Boden, im hydroponischen Medium oder im künstlichen Substrat angebauten Pflanzen.

2. Verwendung nach dem Anspruch 1, wobei das angeführte Präparat weiter mindestens eine Verbindung enthält, ausgewählt aus
(c) Derivaten der Jasmonsäure der allgemeinen Formel (IV) 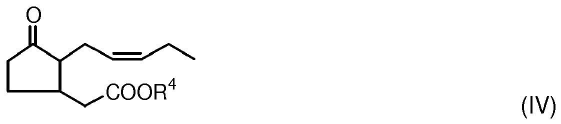 wobei R⁴ bedeutet Wasserstoff, Alkylkette enthaltend 1 - 4 Kohlenstoffatome, Alkalimetallkation, Ammoniumkation, Alkylammoniumkation, Dialkylammoniumkation, Trialkylammoniumkation und Tetraalkylammoniumkation, wobei die Alkylkette 1 - 5 Kohlenstoffatome enthält,
im Konzentrationsbereich 10⁻⁹ bis 10⁻⁴ mol.dm⁻³,
zur Induktion der Bildungssteigerung von bioaktiven Verbindungen in den im Boden, im hydroponischen Medium oder im künstlichen Substrat angebauten Pflanzen.

3. Verwendung nach dem Anspruch 1 oder 2, **dadurch gekennzeichnet, dass** das Präparat weiter einen oder mehrere Stoffe enthält, ausgewählt aus der Gruppe bestehend aus: Harnstoff, Ammoniumsulfat, Ammoniumnitrat, Ammoniumhydrogenphosphat, Ammoniumdihydrogenphosphat, Kaliumnitrat, Kalziumnitrat und Natriumnitrat.

## Revendications

1. Utilisation d'une préparation comprenant comme ingrédient actif
(a) au moins un composé de formule générale (I) 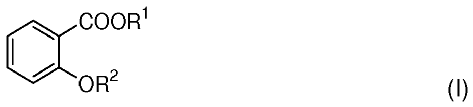 dans laquelle R¹ représente un hydrogène, un ammonium, un cation de métal alcalin, une chaîne alkyle comprenant 1 à 8 atomes de carbone ω-substituée par un groupe hydroxy, amino ou sulfonique, un cycloalkyle comprenant 3 à 8 atomes de carbone, un isoalkyle comprenant 1 à 8 atomes de carbone, un phényle, un phényle substitué dans les positions 2, 3, 4, 5 et 6 par hydrogène, groupe alcoxy comprenant 1 à 5 atomes de carbone, alkyle comprenant 1 à 5 atomes de carbone, halogène ou groupe hydroxy;
R² représente un hydrogène, un acyle comprenant 1 à 18 atomes de carbone, une chaîne alkyle comprenant 1 à 18 atomes de carbone ω-substituée par un groupe hydroxy, amino ou sulfonique, un cycloalkyle comprenant 3 à 8 atomes de carbone, un isoalkyle comprenant 1 à 18 atomes de carbone;
dans l'intervalle de concentration de 10⁻⁷ à 10⁻² mol.dm⁻³,
en combinaison avec
(b) au moins l'un des :
composés de titane formés par la réaction du chlorure de titane avec l'acide ascorbique, l'acide citrique, l'acide malique, l'acide tartrique, l'acide succinique, l'acide oxalique, l'acide salicylique, l'acide éthylènediaminotétracétique ou les acides aminés;
chlorure de titane, bichlorure de titane, sulfate de titanyle, TiO(NH₄)₂(SO₄)₂, hexafluorotitanates de formule générale (II)
M₂TiF₆ (II)
dans laquelle M désigne un cation de métal alcalin, un cation ammonium ou un cation tétraalkylammonium comprenant 1 à 4 atomes de carbone dans chaque chaîne alkyle;
alcoxydes de titane de formule générale (III)
Ti(OR³)₄ (III)
dans laquelle R³ désigne un alkyle comprenant 1 à 18 atomes de carbone, un alkyle comprenant 1 à 18 atomes de carbone ω-substitué par un groupe hydroxy, amino ou sulfonique, un cycloalkyle comprenant 3 à 8 atomes de carbone, un isoalkyle comprenant 1 à 18 atomes de carbone,
dans l'intervalle de concentration de 10⁻⁶ à 10⁻³ mol.dm⁻³,
et contenant, en outre, des additifs, conservateurs et solvants appropriés,
pour l'induction de production accrue de composés bioactifs dans des plantes cultivées dans le sol, en conditions hydroponiques ou sur un substrat synthétique.

2. Utilisation selon la revendication 1, **caractérisée en ce que** ladite préparation contient, en outre, au moins un composé choisi parmi
(c) les dérivés de l'acide jasmonique de formule générale (IV) 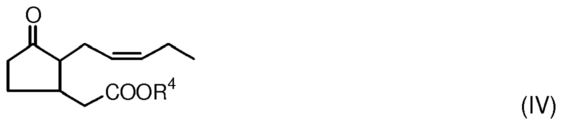 dans laquelle R⁴ représente un hydrogène, une chaîne alkyle comprenant 1 à 4 atomes de carbone, un cation de métal alcalin, un cation ammonium, un cation alkylammonium, un cation dialkylammonium, un cation trialkylammonium ou un cation tétraalkylammonium, où la chaîne alkyle comprend 1 à 5 atomes de carbone,
dans l'intervalle de concentration de 10⁻⁹ à 10⁻⁴ mol.dm⁻³,
pour l'induction de production accrue de composés bioactifs dans des plantes cultivées dans le sol, en conditions hydroponiques ou sur un substrat synthétique.

3. Utilisation selon les revendications 1 ou 2, **caractérisée en ce que** la préparation contient une ou plusieurs substances choisies parmi un groupe consistant de : urée, sulfate d'ammonium, nitrate d'ammoniaque, hydrogénophosphate d'ammonium, dihydrogénophosphate d'ammonium, nitrate de potasse, nitrate de calcium et nitrate de sodium.
